(19) Europäisches Patentamt / European Patent Office / Office européen des brevets

(11) EP 2 336 231 B1

(12) # EUROPEAN PATENT SPECIFICATION

(45) Date of publication and mention of the grant of the patent: **07.09.2016 Bulletin 2016/36**

(51) Int Cl.: ***C08K 3/36*** *(2006.01)* ***C08L 21/00*** *(2006.01)*

(21) Application number: **10195463.4**

(22) Date of filing: **16.12.2010**

(54) **Rubber composition and tire with component containing combined high structure silica and low structure silica**

Kautschukzusammensetzung und Reifen mit Bauteil, das Kombination aus hochstrukturiertem und niedrigstrukturiertem Silica enthält

Composition de caoutchouc et pneu avec composant contenant une combinaison de silice à faible structure et silice à forte structure

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2009 US 641869**

(43) Date of publication of application: **22.06.2011 Bulletin 2011/25**

(73) Proprietor: **The Goodyear Tire & Rubber Company Akron, OH 44316-0001 (US)**

(72) Inventors:
- **Schweitzer, Claude 7750 Colmar-Berg (LU)**
- **Frank, Uwe Ernst 54329 Konz (DE)**
- **Steiner, Pascal Patrick 9233 Diekirch (LU)**
- **Mruk, Ralf 9164 Lipperscheid (LU)**
- **Welter, Carolin Anna 69207 Sandhausen (DE)**

(74) Representative: **Kutsch, Bernd et al Goodyear S.A. Patent Department Avenue Gordon Smith 7750 Colmar-Berg (LU)**

(56) References cited:
**EP-A1- 1 837 369**
**EP-A2- 0 942 029**
**EP-A2- 1 078 954**
**EP-A2- 2 072 284**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 336 231 B1

## Description

### Background of the Invention

The use of silica as a reinforcement in tire rubber compounds is gaining increasing importance due to the improvement.in rolling resistance seen in tires containing silica instead of carbon black. There is then a continuing need for improvement in silica-containing tires.

EP-A- 1 078 954 describes a rubber composition for a tire tread containing a high reinforcing silica with a BET surface area of 140-250 $m^2/g$ and a low reinforcing silica having a BET surface area of 60-135 $m^2/g$.

EP-A- 2 072 284 discloses a tire innerliner rubber composition containing a low structure silica having a median particle size of less than 500 nm, a BET surface area ranging from 15-25 $m^2/g$, and a specific cavity of 2.1-2.3 $g/cm^3$. The rubber pomposition may comprise a second silica, namely HiSil 210 or 243.

EP-A- 0 942 929 describes a further rubber composition comprising two different kinds of silica. A further rubber composition for use in a tire comprising silica is also described in EP-A- 1 837 369.

### Summary of the Invention

The present invention is directed to a pneumatic tire comprising a tread, the tread comprising a rubber composition, in accordance with claim 1.

Dependent claims refer to preferred embodiments of the invention.

### Description of the Invention

In one embodiment of the invention, there is disclosed a pneumatic tire comprising a tread, the tread comprising a rubber composition comprising:

> 100 parts by weight of at least one elastomer;
> from 10 to 80 parts by weight, per 100 parts by weight of elastomer (phr) of a first or high structure silica having a CTAB specific surface area ($S_{CTAB}$) of between 150 and 280 $m^2/g$, and a BET specific surface area ($S_{BET}$) of between 45 and 550 $m^2/g$; and
> from 10 to 70 phr of a second or low structure silica having a median particle size of less than 500 nm, a specific area ranging from 15 to 25 $m^2/g$, and a specific gravity of 2.1 to 2.3 $g/cm^3$.

It has been found unexpectedly that an inclusion of such a rubber composition in a tire tread rubber composition results in improved rolling resistance with acceptable tear strength.

In the description of the invention, the term "phr" relates to parts by weight of a particular ingredient per 100 parts by weight of rubber contained in a rubber composition. The terms "rubber" and "elastomer" are used interchangeably unless otherwise indicated, the terms "cure" and "vulcanize" may be used interchangeably unless otherwise indicated and the terms "rubber composition" and "rubber compound" may be used interchangeably unless otherwise indicated.

The rubber composition includes a first or high structure silica. By high structure, it is meant that the silica has a relatively high specific surface area. Suitable high structure silica may be produced following the methods of US-A-2005/0032965. The characterization of the high structure silica is reproduced herein from US-A-2005/0032965, paragraphs [0055] to [0185].

As disclosed in US-A- 2005/0032965, paragraphs [0055] to [0185]:

> In the description of the high structure silica that follows, the BET specific surface area is determined using the Brunauer-Enimet-Teller method described in "The Journal of the American Chemical Society," Vol. 60, page 309, February 1938 and corresponding to the International Standard ISO 5794/1 (Appendix D).

The CTAB specific surface area is the external surface area determined according to the NF T 45007 (November 1987) - (5.12) standard.

The DOP oil uptake is determined according to the NF T 30-022 (March 1953) standard using dioctyl phthalate:

> The pH is measured according to the ISO 787/9 standard (the pH of a 5% suspension in water).
> The XDC particle size analysis method, using centrifugal sedimentation, by which, on the one hand, the size distribution widths of high structure silica objects and, on the other hand, the XDC mode illustrating its size of objects were measured, is described below.

Equipment Needed:

BI-XDC (Brookhaven Instrument X Disc Centrifuge) centrifugal sedimentation particle size analyser sold by Brookhaven Instrument Corporation;

50 ml tall form beaker;
50 ml graduated measuring cylinder; P1 1500 watt Branson ultrasonic probe, with no endpiece, 13 mm in diameter;
deionized water;
ice-filled crystallizer;
magnetic stirrer.
Measurement Conditions:
DOS 1.35 version of the software (supplied by the manufacturer of the particle size analyser);
fixed mode;
rotation speed;
duration of the analysis: 120 minutes;
density (high structure silica): 2.1;
volume of the suspension to be sampled: 15 ml.

Preparation of the Specimen:

add 3.2 g of high structure silica and 40 ml deionized water to the tall form beaker;
put the beaker containing the suspension in the ice-filled crystallizer;
immerse the ultrasonic probe in the beaker;
disintegrate the suspension for 16 minutes using the 1500 watt Branson probe (used at 60% of maximum power);
after the disintegration, put the beaker on a magnetic stirrer.

Preparation of the Particle Size Analyser:

turn the apparatus on and leave to heat for 30 minutes;
rinse the disc twice with deionized water;
introduce 15 ml of the specimen to be analysed into the disc and start the stirring;
enter into the software the above-mentioned measurement conditions;
make the measurements;
when the measurements have been taken:

stop the disc rotating;
rinse the disc several times with deionized water;
stop the apparatus.

Results

In the apparatus register, record the values of the 16 wt %, 50 wt % (or median) and 84 wt % let-through diameters and the value of the mode (the derivative of the cumulative particle size curve gives a frequency curve the abscissa of the maximum of which (abscissa of the main population) is called the mode).

The size distribution width $L_d$ of objects, measured by XDC particle size analysis, after ultrasonic disintegration (in water), corresponds to the (d84-d16)/d50 ratio in which dn is the size for which n % of particles (by weight) have a size smaller than that size (the distribution width $L_d$ is therefore calculated from the cumulative particle size curve taken in its entirety).

The size distribution width $L'_d$ of objects smaller than 500 nm, measured by XDC particle size analysis, after ultrasonic disintegration (in water), corresponds to the (d84-d16)/d50 ratio in which dn is the size for which n % of particles (by weight), with respect to the particles smaller in size than 500 nm, have a size smaller than that size (the distribution width $L'_d$ is therefore calculated from the cumulative particle size curve truncated above 500 nm).

In addition, using this centrifugal sedimentation XDC particle size analysis method, it is possible to measure a weight-average size of the particles (that is to say of the secondary particles or aggregates), denoted $d_w$, after dispersion, by ultrasonic disintegration, of the high structure silica in water. The method differs from that described above by the fact that the suspension formed (high structure silica+deionized water) is disintegrated, on the one hand, for 8 minutes and, on the other hand, using a 1500 watt 1.9 cm VIBRACELL ultrasonic probe (sold by Bioblock) (the probe being used

at 60% of maximum power). After analysis (sedimentation for 120 minutes), the weight distribution of particle sizes is calculated by the software of the particle size analyser. The weight-average geometrical mean of the particle sizes (Xg according to the nomenclature of the software), denoted $d_w$, is calculated by the software from the following equatic

$$\text{Log } d_w = \sum_{i=1}^{n} m_i \log d_i \,/\, \sum_{i=1}^{n} m_i$$

$m_i$ being the mass of all of the objects in the class of size $d_i$.

The pore volumes given are measured by mercury porosimetry; each specimen is prepared as follows: each specimen is predried for 2 hours in an oven at 200ºC and then placed in a test container within 5 minutes following its removal from the oven and vacuum-degassed, for example using a rotary vane pump; the pore diameters (AUTOPORE III 9420 Micromeritics porosimeter) are calculated by the Washburn equation with a contact angle $\theta$ of 140º and a surface tension $\gamma$ of 484 dynes/cm (or N/m).

$V_{(d5-d50)}$ represents the pore volume formed by the pores of diameters between d5 and d50 and $V_{(d5-d100)}$ represents the pore volume formed by the pores of diameters between d5 and d100, dn here being the pore diameter for which n % of the total surface area of all the pores is formed by the pores of diameter greater than that diameter (the total surface area of the pores ($S_0$) may be determined from the mercury intrusion curve).

The pore distribution width ldp is obtained by the pore distribution curve, as indicated in FIG. 1 of US-A-2005/0032965, i.e. the pore volume (in ml/g) as a function of the pore diameter (in nm): the coordinates of the point S corresponding to the principal population, namely the values of the diameter $X_S$ (in nm) and the pore volume $Y_S$ (in ml/g), are recorded; a straight line of the equation $Y=Y_S/2$ is plotted; this straight line cuts the pore distribution curve at two points A and B on either side of $X_S$, the abscissae (in nm) of points A and B being $X_A$ and $X_B$, respectively; the pore distribution width pdw is equal to the ratio $(X_A-X_B)/X_S$.

In some cases, the dispersibility (and disintegratability) of the high structure silica according to the invention may be quantified by means of specific disintegration tests.

One of the disintegration tests is carried out according to the following protocol:

> The cohesion of the agglomerates is assessed by a particle size measurement (using laser diffraction) carried out on a suspension of high structure silica ultrasonically disintegrated beforehand; in this way, the disintegratability of the high structure silica (the break-up of objects from 0.1 to a few tens of microns) is measured.

The ultrasonic disintegration is carried out using a Bioblock Vibracell sonifier (600-W) fitted with a 19 mm diameter probe. The particle size measurement is carried out by laser diffraction on a SYMPATEC particle size analyser.

Weighed in a pillbox (height: 6 cm and diameter: 4 cm) are 2 grams of high structure silica to which 50 grams of deionized water are added: an aqueous suspension containing 4% high structure silica, which is homogenized for 2 minutes by magnetic stirring, is thus produced. Next, the ultrasonic disintegration is carried out as follows: with the probe immersed over a length of 4 cm, the output power is adjusted so as to obtain a deflection of the needle of the power dial indicating 20%. The disintegration is carried out for 420 seconds. Next, the particle size measurement is taken after a known volume (expressed in ml) of the homogenized suspension has been introduced into the container of the particle size analyser.

The value of the median diameter $Ø_{50S}$ (or Sympatec median diameter) that is obtained is smaller the higher the disintegratability of the high structure silica. It is also possible to determine the (10x volume of suspension (in ml) introduced)/(optical density of the suspension detected by the particle size analyser) ratio may also be determined (this optical density is around 20). This ratio is indicative of the content of particles of a size of less than 0.1 $\mu$m, which particles are not detected by the particle size analyser. This ratio is called the ultrasonic Sympatec disintegration factor ($F_{DS}$).

Another disintegration test is carried out according to the following protocol:

> The cohesion of the agglomerates is assessed by a particle size measurement (using laser diffraction) carried out on a suspension of high structure silica ultrasonically disintegrated beforehand; in this way, the disintegrability of the high structure silica (break-up of objects from 0.1 to a few tens of microns) is measured. The ultrasonic disintegration is carried out using a Bioblock VIBRACELL sonifier (600 W), used at 80% of maximum power, fitted with a 19 mm diameter probe. The particle size measurement is carried out by laser diffraction on a Malvern Mastersizer 2000 particle size analyser.

1 gram of high structure silica is weighed in a pillbox (height: 6 cm and diameter: 4 cm) and deionized water is

added to bring the weight to 50 grams: an aqueous suspension containing 2% high structure silica, which is homogenized for 2 minutes by magnetic stirring, is thus produced. Ultrasonic disintegration is then carried out for 420 seconds. Next, the particle size measurement is taken after all of the homogenized suspension has been introduced into the container of the particle size analyser.

The value of the median diameter $Ø_{50M}$ (or Malvern median diameter) that is obtained is smaller the higher the disintegratability of the high structure silica. It is also possible to determine the (10x blue laser obscuration value)/(red laser obscuration value) ratio. This ratio is indicative of the content of particles smaller in size than 0.1 $\mu$m. This ratio is called the Malvern ultrasonic disintegration factor ($F_{DM}$).

A disintegration rate, denoted $\alpha$, may be measured by means of another ultrasonic disintegration test, at 100% power of a 600 watt probe, operating in pulsed mode (i.e.: on for 1 second/off for 1 second) so as to prevent the ultrasonic probe from heating up excessively during the measurement. This known test, forming the subject matter for example of WO-A- 99/28376 (see also WO-A- 99/28380, WO-A- 00/73372 and WO-A-00/73373), allows the variation in the volume-average size of the particle agglomerates to be continuously measured during sonification, according to the indications given below. The set-up used consists of a laser particle size analyser (of the MASTERSIZER S type sold by Malvern Instruments: He-Ne laser source emitting in the red at a wavelength of 632.8 nm) and of its preparation station (Malvern Small Sample Unit MSX1), between which a continuous flux stream treatment cell (Bioblock M72410) fitted with an ultrasonic probe (600 watt VIBRACELL-type 12.7 mm sonifier sold by Bioblock) was inserted. A small quantity (150 mg) of high structure silica to be analysed is introduced with 160 ml of water into the preparation station, the rate of circulation being set at its maximum. At least three consecutive measurements are carried out in order to determine, using the known Fraunhofer calculation method (Malvern 3$$D calculation matrix), the initial volume-average diameter of the agglomerates, denoted $d_v$[o. Sonification (pulsed mode: on for 1 s/off for 1 s) is then applied at 100% power (i.e. 100% of the maximum position of the tip amplitude) and the variation in the volume-average diameter $d_v[t]$ as a function of time t is monitored for 8 minutes, a measurement being taken approximately every 10 seconds. After an induction period (3-4 minutes), it is observed that the inverse of the volume-average diameter $1/d_v[t]$ varies linearly, or substantially linearly, with time t (disintegration steady state). The rate of disintegration alpha is calculated by linear regression from the curve of variation of $1/d_v[t]$ as a function of time t in the disintegration steady state region (in general, between 4 and 8 minutes approximately); it is expressed in $um^{-1}min^{-1}$.

The aforementioned Application WO-A- 99/28376 describes in detail a measurement device that can be used for carrying out this ultrasonic disintegration test. This device consists of a closed circuit in which a stream of particle agglomerates in suspension in a liquid can circulate. This device essentially comprises a specimen preparation station, a laser particle size analyser and a treatment cell. Setting to atmospheric pressure, within the specimen preparation station and the actual treatment cell, makes it possible for the air bubbles that form during sonification (i.e. the action of the ultrasonic probe) to be continuously removed. The specimen preparation station (Malvern Small Sample Unit MSX1) is designed to receive the high structure silica specimen to be tested (in suspension in the liquid) and to make it circulate around the circuit at the preset speed (potentiometer-maximum speed 3 l/min) in the form of a stream of liquid suspension. This preparation station simply consists of a receiving container which contains the suspension to be analysed and through which the said suspension flows. It is equipped with a variable-speed stirring motor so as to prevent any sedimentation of the particle agglomerates of the suspension, a centrifuge mini-pump is designed to circulate the suspension in the circuit; the inlet of the preparation station is connected to the open air via an opening intended to receive the charge specimen to be tested and/or the liquid used for the suspension. Connected to the preparation station is a laser particle size analyser (MASTERSIZER S) whose function is to continuously measure, at regular time intervals, the volume-average size $d_v$ of the agglomerates, as the stream passes, by a measurement cell to which the recording means and the automatic calculation means of the particle size analyser are coupled. It will be briefly recalled here that laser particle size analysers make use, in a known manner, of the principle of light diffraction by solid objects in suspension in a medium whose refractive index is different from that of the solid. According to the Fraunhofer theory, there is a relationship between the size of the object and the angle of diffraction of the light (the smaller the object the larger the angle of diffraction). In practice, all that is required is to measure the quantity of diffracted light for various angles of diffraction in order to be able to determine the size distribution (by volume) of the specimen, $d_v$ corresponding to the volume-average size of this distribution $d_v=\Sigma (n_i d_j 4)/\Sigma(n_i d_j^3)$ where $n_i$ is the number of objects of the class of size or diameter $d_j$. Finally, a treatment cell fitted with an ultrasonic probe is inserted between the preparation station and the laser particle size analyser, the said cell being able to operate in continuous or pulsed mode and intended to continuously break up the particle agglomerates as the stream passes. This stream is thermostatically controlled by means of a cooling circuit placed, within the cell, in a jacket surrounding the probe, the temperature being controlled, for example, by a temperature probe immersed in the liquid within the preparation station.

The Sears number is determined using the method described by G. W. Sears in the article in Analytical Chemistry, Vol. 28, No. 12, December 1956 entitled "Determination of specific surface area of colloidal high structure silica by titration with sodium hydroxide."

The Sears number is the volume of 0.1 M sodium hydroxide solution needed to raise the pH of a 10 g/l high

structure silica suspension in a 200 g/l sodium chloride medium from 4 to 9.

To do this, 400 grams of sodium chloride are used to prepare a 200 g/l sodium chloride solution acidified to pH 3 with a 1 M hydrochloric acid solution. The weighings are performed by means of a Mettler precision balance. 150 ml of this sodium chloride solution are delicately added to a 250 ml beaker into which a mass M (in g) of the specimen to be analysed, corresponding to 1.5 grams of dry high structure silica, has been introduced beforehand. Ultrasound is applied for 8 minutes to the dispersion obtained (Branson 1500 W ultrasonic probe; 60% amplitude, 13 mm diameter), the beaker being in an ice-filled crystallizer. The solution obtained is then homogenized by magnetic stirring, using a bar magnet having dimensions of 25 mm x 5 mm. A check is made that the pH of the suspension is less than 4, if necessary by adjusting it using a 1 M hydrochloric acid solution. Next, a 0.1 M sodium hydroxide solution is added ata rate of 2 ml/min by means of a Metrohm titrator pH meter (672 Titroprocessor, 655 Dosimat) precalibrated using pH 7 and pH 4 buffer solutions. (The titrator pH meter was programmed as follows: 1) Call up the "Get pH" program- and 2) Introduce the following parameters: pause (wait time before the start of titration): 3 s; reactant flow rate: 2 ml/min; anticipation (adaptation of the titration rate to the slope of the pH curve): 30; stop pH: 9.40; critical EP (sensitivity of detection of the equivalence point): 3; report (parameters for printing the titration report): 2, 3 and 5 (i.e. creation of a detailed report, list of measurement points and titration curve)). The exact volumes $V_1$ and $V_2$ of sodium hydroxide solution added in order to obtain a pH of 4 and a pH of 9, respectively, are determined by interpolation. The Sears number for 1.5 grams of dry high structure silica is equal to (($V_2$-$V_{sub}$ 1) x 150)/(SC-M), where:

$V_1$: volume of 0.1 M sodium hydroxide solution at $pH_1$=4;
$V_2$: volume of 0.1 M sodium hydroxide solution at $pH_2$=9;
M: mass of the specimen (in g);
SC: solids content (in %).

The pore distribution width may possibly be also illustrated by the parameter W/FI determined by mercury porosimetry. The measurement is carried out using PASCAL 140 and PASCAL 440 porosimeters sold by ThermoFinnigan, operating in the following manner: a quantity of specimen between 50 and 500 mg (in the present case 140 mg) is introduced into a measurement cell. This measurement cell is installed in the measurement unit of the PASCAL-140 apparatus. The specimen is then vacuum-degassed for the time needed to achieve a pressure of 0.01 kPa (typically around 10 minutes). The measurement cell is then filled with mercury. The first part of the mercury intrusion curve Vp=f(P), where Vp is the mercury intrusion volume and P is the applied pressure, for pressures of less than 400 kPa, is determined using the PASCAL 140 porosimeter. The measurement cell is then installed in the measurement unit of the PASCAL 440 porosimeter, the second part of the mercury intrusion curve Vp=f(P) for pressures between 100 kPa and 400 MPa being determined using the PASCAL 440 porosimeter. The porosimeters are used in PASCAL mode so as to permanently adjust the rate of mercury intrusion according to the variations in the intrusion volume. The rate parameter in PASCAL mode is set to 5. The pore radii Rp are calculated from the pressure values P using the Washburn equation, assuming that the pores are cylindrical, choosing a contact angle θ of 140º and a surface tension y of 480 dynes/cm (or N/m). The pore volumes Vp are relative to the mass of high structure silica introduced and are expressed in $cm^3$/g. The signal Vp=f(Rp) is smoothed by combining a logarithmic filter ("smooth dumping factor" filter parameter F=0.96.) and a moving- average filter ("number of points to average" filter parameter f=20). The pore size distribution is obtained by calculating the derivative dVp/dRp of the smooth intrusion curve. The fineness index FI is the pore radius value (expressed in angstroms) corresponding to the maximum of the pore size distribution dVp/dRp. The mid-height width of the pore size distribution dVp/dRp is denoted by W.

The number of silanols per $nm^2$ of surface area is determined by grafting methanol onto the surface of the high structure silica. Firstly, 1 gram of raw high structure silica is put into suspension in 10 ml of methanol, in a 110 ml autoclave (Top Industrie, reference 09990009). A bar magnet is introduced and the autoclave, hermetically sealed and thermally insulated, is heated to 200ºC (40 bar) on a magnetic stirrer, heating for 4 hours. The autoclave is then cooled in a cold water bath. The grafted high structure silica is recovered by settling and the residual methanol is evaporated in a stream of nitrogen. Finally, the grafted high structure silica is vacuum dried for 12 hours at 130ºC. The carbon content is determined by an elemental analyser (NCS 2500 analyser from CE Instruments) on the raw high structure silica and on the grafted high structure silica. This quantitative determination is carried out on the grafted high structure silica within the three days following the end of drying--this is because the humidity of the air or heat may cause hydrolysis of the methanol grafting. The number of silanols per $nm^2$ is then calculated using the following formula:

$$N_{SiOH/nm2}=[(\%\ C_g-\%\ C_r) \times 6.023 \times 10^{23}] / [S_{BET} \times 10^{18} \times 12 \times 100]$$

where % $C_g$: percent mass of carbon present on the grafted high structure silica;

% $C_r$: percent mass of carbon present on the raw high structure silica;
$S_{BET}$: BET specific surface area of high structure silica (in $m^2/g$).

According to a first variant of the invention, a novel first or high structure silica will now be proposed which is characterized in that it possesses:

a CTAB specific surface area ($S_{CTAB}$) of between 40 and 525 $m^2/g$;
a BET specific surface area ($S_{BET}$) of between 150 and 280 m2/g;
preferably a size distribution width $L_d$ ((d84-d16)1d50) of objects smaller than 500 nm, measured by XDC particle size analysis after ultrasonic disintegration of at least 0.91, in particular at least 0.94; and
preferably a pore volume distribution as a function of the size of the pores such that the ratio $V_{(d5-d50)}/V_{(d5-d100)}$ is at least 0.66, in particular at least 0.68.

The high structure silica according to a preferred variant of the invention possesses, for example:

a size distribution width $L_d$ ((d84-d16)/d50) of objects measured by XDC particle size analysis after ultrasonic disintegration of at least 1.04; and
a pore volume distribution as a function of the size of the pores such that the ratio $V_{(d5-d50)}/V_{(d5-d100)}$ is at least 0.71.

This high structure silica may have a ratio $V_{(d5-d50)}/V_{(d5-d100)}$ of at least 0.73, in particular at least 0.74. This ratio may be at least 0.78, especially at least 0.80 or even at least 0.84.
A second variant of the invention consists of a novel high structure silica characterized in that it possesses:

a CTAB specific surface area ($S_{CTAB}$) of between 40 and 525 $m^2/g$;
a BET specific surface area ($S_{BET}$) of between 150 and 280 $m^2/g$; and
preferably a pore distribution width ldp of greater than 0.70, in particular greater than 0.80, especially greater than 0.85.

This high structure silica may have a pore distribution width ldp of greater than 1.05, for example greater than 1.25 or even greater than 1.40.
The high structure silica according to this variant of the invention preferably possesses a size distribution width $L_{sub}$ d ((d84-d16)/d50) of objects smaller than 500 nm, measured by XDC particle size analysis after ultrasonic disintegration, of at least 0.91, in particular at least 0.94, for example at least 1.0.
Also proposed, according to a third variant of the invention, is a novel high structure silica characterized in that it possesses:

a CTAB specific surface area ($S_{CTAB}$) of between 40 and 525 $m^2/g$;
a BET specific surface area ($S_{BET}$) of between 150 and 280 $m^2/g$;
preferably a size distribution width $L'_d$ ((d84-d16)/d50) of objects smaller than 500 nm, measured by XDC particle size analysis after ultrasonic disintegration, of at least 0.95; and
preferably a pore volume distribution as a function of the size of the pores such that the ratio $V_{(d5-d50)}/V_{(d5-d100)}$ is at least 0.71.

This high structure silica may have a ratio $V_{(d5-d50)}/V_{(d5-d100)}$ of at least 0.73, in particular at least 0.74. This ratio may be at least 0.78, especially at least 0.80 or even at least 0.84.
A fourth variant of the invention consists of a novel high structure silica characterized in that it possesses:

a CTAB specific surface area ($S_{CTAB}$) of between 40 and 525 $m^2/g$;
a BET specific surface area ($S_{BET}$) of between 150 and 280 $m^2/g$;
preferably a size distribution width $L_d$ ((d84-d16)/d50) of objects smaller than 500 nm, measured by XDC particle size analysis after ultrasonic disintegration, of at least 0.90, in particular at least 0.92; and
preferably a pore volume distribution as a function of 25 the size of the pores such that the ratio $V_{(d5-d50)}/V_{(d5-d100)}$ is at least 0.74.

This high structure silica may have a ratio $V_{(d5-d50)}/V_{(d5-d100)}$ of at least 0.78, especially at least 0.80 or even at least 0.84.
In the first or high structure silica according to the invention (that is to say those in accordance with one of the four variants of the invention), the pore volume provided by the coarsest pores usually represents the largest proportion

of the structure.

The high structure silica may have both an object size distribution width $L_d$ of at least 1.04 and an object size (smaller than 500 nm) distribution width $L'_d$ of at least 0.95.

The size distribution width $L_d$ of objects of the high structure silica according to the invention may in certain cases be at least 1.10, in particular at least 1.20; it may be at least 1.30, for example at least 1.50 or even at least 1.60.

Likewise, the object size (smaller than 500 nm) distribution $L'_d$ of the high structure silica according to the invention may be, for example, at least 1.0, in particular at least 1.10 and especially at least 1.20.

Preferably, the high structure silica according to the invention possess a particular surface chemistry such that they have a (Sears number x 1000)/(BET specific surface area ($S_{BET}$)) ratio of less than 60, preferably less than 55, for example less than 50.

The high structure silica according to the invention generally have a high, and therefore a typical object size which may be such that the mode of their particle size distribution measured by XDC particle size analysis after ultrasonic disintegration (in water) satisfies the condition: XDC mode (nm) $\geq$ (5320/$S_{CTAB}$ ($m^2/g$))+8, or even the condition: XDC mode (in nm) $\geq$ (5320/$S_{CTAB}$ ($m^2/g$))+10.

The high structure silica according to the invention may possess, for example, a pore volume ($V_{80}$) formed by the pores having diameters between 3.7 and 80 nm of at least 1.35 $cm^3/g$, in particular at least 1.40 $cm^3/g$ or even at least 1.50 $cm^3/g$.

The high structure silica according to the invention preferably have a satisfactory dispersibility in polymers.

Their median diameter ($Ø_{50S}$), after ultrasonic disintegration, is in general less than 8.5 $\mu$m; it may be less than 6.0 $\mu$m, for example less than 5.5 $\mu$m.

Likewise, their median diameter ($Ø_{50M}$), after ultrasonic disintegration, is in general less than 8.5 $\mu$m, it may be less than 6.0 $\mu$m, for example less than 5.5 $\mu$m.

They may also possess a rate of disintegration, denoted by $\alpha$, measured in the test referred to previously as ultrasonic disintegration in pulsed mode, at 100% power of a 600 watt probe, of at least 0.0035 $\mu m^{-1}$ $min^{-1}$ in particular at least 0.0037 $\mu$m-1 $min^{-1}$.

The high structure silica according to the invention may have an ultrasonic disintegration factor ($F_{DS}$) of greater than 3 ml, in particular greater than 3.5 ml, especially greater than 4.5 ml.

Their ultrasonic disintegration factor ($F_{DM}$) may be greater than 6, in particular greater than 7, especially greater than 11.

The high structure silica according to the present invention may have a weight-average particle size, measured by XDC particle size analysis after ultrasonic disintegration dw, of between 20 and 300 nm, especially between 30 and 300 nm, for example between 40 and 160 nm.

In general, the high structure silica according to the present invention also have at least one, or even all, of the following three characteristics:

- a particle size distribution such that $d_w \geq (16{,}500/S_{CTAB})-30$;
- a porosity such that W/FI $\geq -0.0025\ S_{CTAB}+0.85$; and
- a number of silanols per unit area, $N_{SiOH/nm2}$, such that

$$N_{SiOH/nm2} \leq -0.027\ S_{CTAB}+10.5.$$

According to one embodiment, the high structure silica according to the invention generally have:

- a CTAB specific surface area ($S_{CTAB}$) of between 60 and 330 $m^2/g$, in particular between 80 and 290 $m^2/g$;
- a BET specific surface area ($S_{BET}$) of between 70 and 350 $m^2/g$, in particular between 90 and 320 $m^2/g$.

Their CTAB specific surface area may be between 90 and 230 $m^2/g$, especially between 95 and 200 $m^2/g$, for example between 120 and 190 $m^2/g$.

Likewise, their BET specific surface area may be between 110 and 270 $m^2/g$, especially between 115 and 250 $m^2/g$, for example between 135 and 235 $m^2/g$.

According to another embodiment, the high structure silica according to the invention generally have:

- a CTAB specific surface area of between 40 and 380 $m^2/g$, in particular between 45 and 280 $m^2/g$; and
- a BET specific surface area of between 45 and 400 $m^2/g$, in particular between 50 and 300 $m^2/g$.

Their CTAB specific surface area may be between 115 and 260 $m^2/g$, especially between 145 and 260 $m^2/g$.

Likewise, their BET specific surface area may be between 120 and 280 $m^2/g$, especially between 150 and 280 $m^2/g$, and more especially between 200 and 260 $m^2/g$.

The high structure silica according to the present invention may have a certain microporosity; thus, the high structure silica according to the invention usually are such that $(S_{BET}-S_{CTAB}) \geq 5$ $m^2/g$, in particular $\geq 15$ $m^2/g$, for example $\geq 25$ $m^2$)g.

This microporosity is not in general too great: the high structure silica according to the invention are generally such that $(S_{BET}-S_{CTAB}) < 50$ $m^2/g$, preferably <40 $m^2/g$.

The pH of the high structure silica according to the invention is usually between 6.3 and 7.8, especially between 6.6 and 7.5.

They possess a DOP oil uptake that varies, usually, between 220 and 330 ml/100 g, for example between 240 and 300 ml/100 g.

They may be in the form of approximately spherical beads with a mean size of at least 80 μM.

This mean size of the beads may be at least 100 μm, for example at least 150 μm; it is in general at most 300 μm and preferably lies between 100 and 270 μm. This mean size is determined according to the NF X 11507 (December 1970) standard by dry screening and determination of the diameter corresponding to a cumulative oversize of 50%.

The high structure silica according to the invention may also be in the form of powder having a mean size of at least 15 μm; for example, it is between 15 and 60 μm (especially between 20 and 45 μm) or between 30 and 150 μm (especially between 45 and 120 μm).

They may also be in the form of granules having a size of at least 1 mm, in particular between 1 and 10 mm, along the axis of their largest dimension (length).

The high structure silica according to the invention are preferably prepared by the preparation process according to the invention and described above.

The rubber composition also includes a second or low structure silica. By low structure, it is meant that the silica has a relatively low specific surface area and is preferably of a mostly spherical primary particle geometry with a low aggregation tendency. The term silica as used herein preferably refers to particulate amorphous $SiO_2$ obtained from a gas phase process in which silica is reduced and the reduction product is oxidized in vapor phase to form amorphous silica. Such silica may contain at least 97% by weight silica ($SiO_2$) and have a specific density of 2.1-2.3 $g/cm^3$ and a surface area at 15-25 $m^2/g$. The primary particles are substantially spherical. The primary particles preferably have a median size of 0.15 microns, with a range of median size of 100 to 200 nm. Silica is preferably obtained as a co-product in the production of silicon or silicon alloys in electric reduction furnaces. In these processes large quantities of silica are formed as $SiO_2$. The $SiO_2$ is recovered in conventional manner using filter or other collection apparatus.

Silica may be produced as a by-product during production of ferrosilicon and silicon in electric reduction furnaces where a charge comprising a $SiO_2$ source and one or more solid carbonaceous reduction agents is reacted to form ferrosilicon or silicon. In this process, gaseous SiO is formed as an intermediate product in the reaction zone in the furnace and the gas moves upwards through the charge. A part of the SiO gas is condensed in the cooler charge above the reaction zone, while the remaining part of the SiO gas escapes from the charge, is quickly cooled and oxidized by air which is supplied to the furnace, above the charge, and forms particulate amorphous $SiO_2$ The particulate $SiO_2$ is carried upward out of the furnace in the off-gas and is recovered from the furnace off-gas in filters, normally baghouse filters. Silica produced in this way has a particle size less than 0.5 micrometers (500 nm), substantially between 0.02 and 0.5 micrometers, and the individual particles are basically of spherical shape. Suitable low structure silica may be produced, for example, following methods as disclosed in US-B- 6,696,035.

Suitable low structure silica is available commercially as the Sidistar® series from Elkem, including but not limited to Sidistar® R. Sidistar® R is reported to have properties as follows: silicon dioxide (amorphous $SiO_2$), minimum 90.0 percent by weight; carbon (C), maximum 1.50 percent by weight; iron oxide ($Fe_2O_3$, maximum 0.25 percent by weight; copper (Cu), maximum 0.01 percent by weight; manganese (Mn), maximum 0.02 percent by weight; water ($H_2O$ when packed) maximum 0.80 percent by weight; loss on ignition at 975ºC, 1.80%; BET surface area 15-25 $m^2/g$; median particle size 0.15 micrometers coarse particles (>45 micrometers), maximum 0.10 percent by weight; pH-value (fresh), 6.5-8.0; specific gravity 2.2 $g/cm^3$; and bulk density (when packed), 500-700 $kg/m^3$.

In one embodiment, the low structure silica has a bimodal particle size distribution with a narrow maximum at 20 nm and a second, broader maximum at 100 nm to 400 nm.

In one embodiment, individual particles of the low structure silica are substantially spherical in shape.

By substantially spherical, it is meant that the low structure silica particles have a surface area-based sphericity of greater than 0.95, ranging from 0.95 to 1, according to the following definition (following US-A- 5,915,150):

sphericity = [geometrical specific surface area ($m^2$ /g) based on an assumption that the substantially spherical particles are in the form of true spheres]/[actually measured BET specific surface area ($m^2$ /g) of the substantially spherical fine particles].

The values of BET specific surface area ($m^2$ /g) of the substantially spherical particles for calculation of sphericity referred to herein are based on measurement by using a specific surface area meter (for example, "Autosorb 1," available from QUANTACHROME Co.) performed in the following manner.

About 0.3 g of substantially pherical particles are weighed into a cell, subjected to evacuation at a temperature of 40°C and a vacuum of 1.0 x $10^{-3}$ mm Hg for at least 1 hour, and then subjected to nitrogen adsorption, while being cooled at liquid nitrogen temperature, for specific surface area determination according to the BET multi-point method.

The geometrical specific surface area ($m^2$ /g) on an assumption that the substantially spherical particles are in the form of true spheres, may be measured in the following manner. Sample substantially spherical particles are photographed at a magnification of 10,000 through an electron microscope, and images of 100 particles each having a particle size of at least 10 nm are selected at random to obtain an average of the longer-axis diameters of the 100 particles. Then, a substantially spherical fine particle is assumed to be a true sphere having a radius r(= ½ x the average longer-axis diameter) so that its surface area is calculated as $4\pi r^2$ ($m^2$) and its volume is calculated as $4/3\pi r^3$ ($m^3$). Then, by using a density $d_b$ (g/$m^3$) of the substantially spherical particles separately measured, the assumed geometrical specific surface area can be calculated as $4\pi r^2$ /( $4/3\pi r^3$ $d_b$)=3/( r $d_b$).

In one embodiment, the amount of second or low structure silica may be present in the rubber composition in an amount ranging from 10 to 70 phr. In another embodiment, the amount of second or low structure silica may be present in the rubber composition in an amount ranging from 10 to 40 phr.

The rubber composition may be used with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective

material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including, aromatic, paraffinic, naphthenic, vegetable oils, and low PCA oils, such as MES, TDAE, SRAE and heavy naphthenic oils. Suitable low, PCA oils include those having a polycyclic aromatic content of less than 3 percent by weight as determined by the IP346 method. Procedures for the IP346 method may be found in Standard Methods for Analysts & Testing of Petroleum and Related Products and British Standard 2000 Parts, 2003, 62nd edition, published by the Institute of Petroleum, United Kingdom.

The rubber composition may include from 20 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

The silica may also be characterized by having a dibutylphthalate (DBP) absorption value in a range of 100 to 400, alternatively 150 to 300.

Various commercially available silicas may be used, such as silicas commercially available from PPG Industries under the Hi-Sil trademark with designations 210 and 243 silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 $cm^3$/100 g.

Other fillers may be used in the rubber composition including, but not limited to, particulate fillers including ultra high molecular weight polyethylene (UHMWPE), crosslinked particulate polymer gels including but not limited to those disclosed in US-A-6,242,534; US-A- 6,207,757; US-A- 6,133,364; US-A- 6,372,857; US-A- 5,395,891; or US-A-6,127,488, and plasticized starch composite filler including but not limited to that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

$$Z - Alk - S_n - Alk - Z \qquad \text{III}$$

in which Z is selected from the group consisting of

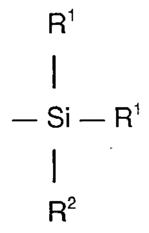 , 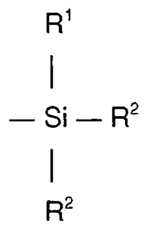 and 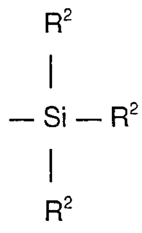

where $R^1$ is an alkyl group of 1 to 4 carbon atoms, cyclohexyl or phenyl; $R^2$ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula III, Z may be

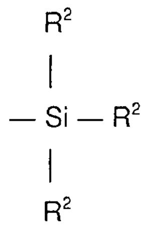

where $R^2$ is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, $CH_3(CH_2)_6C(=O)$ -S-$CH_2CH_2CH_2Si(OCH_2CH_3)_3$, which is available commercially as NXT™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and diberizamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfonamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function

of the operating conditions, and the volume and nature of the components. For example, the thermomechanical working may be from 1 to 20 minutes.

The rubber composition is incorporated in a tire tread.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air.

The following examples are presented in order to illustrate the present invention. The parts and percentages are by weight unless otherwise noted.

**Example 1**

In this example, the effect of dispersing a first or high structure silica and second or low structure silica in a rubber tread composition is illustrated. All amounts are in parts by weight. The rubber compositions were mixed using a multi phase mixing procedure, with addition of the elastomers and fillers in a several non-productive mix steps, followed by addition of conventional amounts of curatives in a productive mix step to obtain a rubber compound.

Samples were tested for viscoelastic properties using a Rubber Process Analyzer as RPA 2000™ instrument by Alpha Technologies, formerly of the Flexsys Company and formerly of the Monsanto Company. References to an RPA 2000 instrument may be found in the following publications: H. A. Palowski, et al, Rubber World, June 1992 and January 1997, as well as Rubber & Plastics News, April 26 and May 10, 1993.

Samples were tested for tensile properties using an Automated Testing System (ATS) instrument by the Instron Corporation which incorporates six tests in one system. Such instrument may determine ultimate tensile, ultimate elongation, moduli, etc. Data reported in the Table is generated by running the ring tensile test.

Samples were tested for abrasion resistance (DIN abrasion, in terms of relative volume loss compared to a control) according to DIN 53516.

Sample were tested for Zwick rebound according to DIN 53512.

Tear strength samples were prepared by a standard peel tear test on 1" (2.54cm) wide specimens. Strip adhesion samples were made by preparation of a sandwich of two layers of the compound separated by a mylar window sheet. The sandwich was cured and 1" (2.54 cm) samples cut centered on each window in the mylar. The cured samples were then tested for tear strength between the sheets in the area defined by the mylar window by 180 degree pull on a test apparatus. Cured samples were tested for tear strength at the indicated test conditions.

**Table 1**

| Sample No. | 1 | 2 | 3 |
|---|---|---|---|
| **Non-Productive Mix Steps** | | | |
| Polybutadiene | 10 | 10 | 10 |
| 3,4 Polyisoprene | 15 | 15 | 15 |
| Styrene-Butadiene Rubber[1] | 103.13 | 103.13 | 103.13 |
| Waxes[2] | 1.5 | 1.5 | 1.5 |
| Antidegradant[3] | 2.5 | 2.5 | 2.5 |
| Process Oil | 3 | 3 | 3 |
| Stearic Acid | 2.5 | 2.5 | 2.5 |
| Fatty Acid Zinc Salts | 1 | 1 | 1 |
| Resins[4] | 16 | 16 | 16 |
| Silane Coupling Agent[5] | 7.6 | 9.66 | 9:66 |
| Carbon Black | 20 | 20 | 20 |
| Precipitated Silica[6] | 95 | 0 | 0 |
| Low Structure Silica[7] | 0 | 0 | 10 |

(continued)

| Sample No. | 1 | 2 | 3 |
|---|---|---|---|
| **Non-Productive Mix Steps** | | | |
| High Structure Silica[8] | 0 | 72 | 62 |
| **Productive Mix Step** | | | |
| Antidegradant[3] | 0.5 | 0.5 | 0.5 |
| Zinc Oxide | 2.5 | 2.5 | 2.5 |
| Sulfur | 1.5 | 1.5 | 1.5 |
| Accelerators[9] | 4.2 | 4.2 | 4.2 |
| Silane Coupling Agent[10] | 2 | 2 | 2 |

[1] Extended with 37.5 phr oil
[2] Microcrystalline and paraffinic types
[3] Paraphenylene diamine types
[4] Coumarone-indene and styrene-alphamethyl styrene types
[5] Organosilane disulfide type
[6] Precipitated silica with BET surface area of 160 $m^2/g$, as Zeosil© 1165MP from Rhodia
[7] Microsilica with aBET surface area of 20 $m^2/g$, as Sidistar® R from Elkem.
[8] Silica with BET surface area of 242 $m^2/g$, as disclosed in US-A- 2005/0032965, obtained from Rhodia.
[9] Sulfenamide and guanidine types
[10] Organosilane tetrasulfide type

**Table 2**

| Sample No. | 1 | 2 | 3 |
|---|---|---|---|
| **Zwick Rebound (DIN 53512)** | | | |
| Cure: 10 min @ 170°C; Test: @ 0°C | | | |
| Rebound Value, % | 8.4 | 9.9 | 8.7 |
| Cure: 10 min @ 170°C; Test: @ 100°C | | | |
| Rebound Value, % | 43.3 | 48.5 | 50.5 |
| **RPA2000** | | | |
| Uncured; Test: @ 100 °C, Dyn Strain = 15 %, Frequency = 0.83/8.3 | | | |
| G'(15%), MPa | 0.41 | 0.44 | 0.36 |
| Cure: 10 min @ 170°C; Test: @ 100 C, Frequency = 1 Hz | | | |
| G'(1% strain), MPa | 4.13 | 3.93 | 3.02 |
| Tan Delta (1% strain) | 0.189 | 0.157 | 0.1485 |
| G'(10% strain), MPa | 2.20 | 2.27 | 1.89 |
| Tan, Delta (10% strain) | 0.209 | 0.225 | 0.178 |
| G'(50% strain), MPa | 0.95 | 0.95 | 0.93 |
| Tan Delta (50% strain) | 0.284 | 0.418 | 0.321 |
| **Tensile Properties (ATS)** | | | |
| Cure: 10 min @ 170°C; Test: @ 23°C | | | |
| 100% Modulus, MPa | 2.57 | 3.01 | 2.73 |
| 200% Modulus, MPa | 5.9 | 5.9 | 5.4 |

(continued)

| **Tensile Properties (ATS)** | | | |
|---|---|---|---|
| 300% Modulus, MPa | 10.6 | 9.5 | 8.7 |
| Mod300/Mod100 | 4.1 | 3.2 | 3.2 |
| Elongation at Break, % | 436 | 504 | 531 |
| Tensile Strength, MPa | 14.7 | 16.4 | 16 |
| Specific Energy, MPa | 25.7 | 33.9 | 34.6 |
| True Tensile | 78.8 | 99.1 | 101 |
| Shore A | 72.1 | 74.4 | 70.6 |
| Rebound Value, % | 13.5 | 16.8 | 16.7 |
| **Tear Strength** | | | |
| Cure: 10 min @ 170°C; Test: @ 100°C, Adhesion to Itself. | | | |
| Tear Strength | 2.9 | 21.5 | 24.7 |
| **Rotary Drum Abrasion** | | | |
| Cure: 10 min @ 170°C; Test: @ 23°C | | | |
| Relative Volume Loss, $mm^3$ 190 | 190 | 164 | 172 |

As seen in Tables 1 and 2, high temperature rebound (at 100ºC) is increased for Sample 3 containing the high and low structure silicas, as compared to the control Samples 1 and 2. Such an increase in high temperature rebound indicates a lower hysteresis, corresponding to lower rolling resistance in a tire rubber compound. Also indicating a lower hysteresis in the tangent delta at low strain, with a significantly lower value of tangent delta at 1% strain for Sample 3 as compared with,controls Samples 1 and 2. Tear strength is significantly improved for Sample 3 and compared with control Samples 1 and 2.

## Claims

1. A pneumatic tire comprising a tread, the tread comprising a rubber composition comprising 100 parts by weight of at least one elastomer; from 10 to 80 parts by weight, per 100 parts by weight of elastomer (phr), of a first silica having a CTAB specific surface area ($S_{CTAB}$) as measured according to the NF T 45007 (November 1987) (5.12) standard of between 150 and 280 $m^2/g$ and a BET specific surface area ($S_{BET}$) as mesured in accordance with ISO 57 94 / 1 (Appendix D) of between 45 and 550 $m^2/g$; and from 10 to 70 phr of a second silica having a median particle size determined by centifugal sedimentation of less than 500 nm, a BET specific area as mesured in accordance with ISO 57 94 / 1 (Appendix D) ranging from 15 to 25 $m^2/g$, and a specific gravity of 2.1 to 2.3 $g/cm^3$.

2. The tire of claim 1 wherein the elastomer is selected from the group consisting of butyl rubber, chlorinated butyl rubber, brominated butyl rubber, synthetic polyisoprene, natural rubber, styrene butadiene rubber, polybutadiene, copolymer of isobutylene and paramethylstyrene, and brominated copolymer of isobutylene and paramethylstyrene.

3. The tire of claim 1 wherein the first silica has a BET specific surface area ($S_{BET}$) between 200 and 260 $m^2/g$.

4. The tire of at least one of the previous claims wherein the second silica has a bimodal particle size distribution with a first maximum in a range of from 15 nm to 25 nm or at 20 nm, and a second maximum at in a range of from 100 nm to 400 nm.

5. The tire of at least one of the previous claims wherein the amount of the second silica is in the range of from 10 to 40 phr.

6. The tire of at least one of the previous claims wherein the second silica has a median particle size in a range of from 100 to 200 nm.

7. The tire of at least one of the previous claims wherein the total amount of the first and second silica in the composition ranges from 10 to 30 percent by volume.

8. The tire of at least one of the previous claims wherein the second silica is at least substantially spherical in shape; and/or wherein the second silica has a surface-area based sphericity of greater than 0.95, sphericity being the ratio of the geometrical specific surface area in $m^2/g$ based on the assumption that the substantially spherical particles are in the form of the true spheres to the actually measured BET specific surface area in $m^2/g$ of the substantially spherical fine particles.

9. The tire of at least one of the previous claims wherein the second silica has at least one of the following properties:

(i) a silicon dioxide, preferably amorphous $SiO_2$, content of at least 90.0 percent by weight;
(ii) a carbon content of not more than 1.50 percent by weight;
(iii) an iron oxide content of not more than 0.25 percent by weight;
(iv) a copper content of not more than 0.01 percent by weight;
(v) a manganese content of not more than 0.02 percent by weight;
(vi) a water content ($H_2O$ when packed) of not more than 0.80 percent by weight;
(vii) a loss on ignition at 975°C of 1.80% or in a range of from 1.70% to 1.90%;
(viii) a BET surface area in a range of from 15 to 25 $m^2/g$;
(ix) a median particle size of 0.15 microns or in a range of from 0.12 to 0.18 microns;
(x) coarse particles (>45 microns) of not more than 0.10 percent by weight;
(xi) a pH-value (fresh) in a range of from 6.5 to 8.0;
(xii) a specific gravity of 2.2 $g/cm^3$ or in a range of from 2.15 $g/cm^3$ to 2.25 $g/cm^3$;
(xiii) a bulk density (when packed) in a range of from 500 to 700 $kg/m^3$.

10. The tire of at least one of the previous claims wherein the first silica has a size distribution width $L_d$ ((d84-d16)/d50) of objects smaller than 500 nm, measured by XDC particle size analysis after ultrasonic disintegration, at least 0.91; and/or wherein the first silica has a pore distribution expressed as a pore volume distribution such that the ratio $V_{(d5-d50)}/V_{(d5-d100)}$ is at least 0.66.

11. The tire of at least one of the previous claims wherein the first silica has a size distribution width $L'_d$ ((d84-d16)/d50) of objects smaller than 500 nm, measured by XDC particle size analysis after ultrasonic disintegration of at least 0.95 and/or a pore distribution expressed as a pore volume distribution such that the ratio $V_{(d5-d50)}/V_{(d5-d100)}$ is at least 0.71.

12. The tire of at least one of the previous claims wherein the first silica has a size distribution width $L'_d$ ((d84-d16)Ld50) of objects smaller than 500 nm, measured by XDC particle size analysis after ultrasonic disintegration, of at least 0.90 and/or a pore distribution expressed as a pore volume distribution such that the ratio $V_{(d5-d50)}/V_{(d5-d100)}$ is at least 0.74.

13. The tire of at least one of the previous claims wherein the first silica further has a pore distribution wherein the pore distribution is expressed as a pore distribution width ldp of greater than 0.70.

## Patentansprüche

1. Luftreifen, umfassend eine Lauffläche, wobei die Lauffläche eine Kautschukzusammensetzung umfasst, umfassend 100 Gewichtsteile mindestens eines Elastomers; 10 bis 80 Gewichtsteile, je 100 Gewichtsteile Elastomer (phr), eines ersten Silikas mit einer spezifischen CTAB-Oberfläche ($S_{CTAB}$), gemessen gemäß der Norm NF T 45007 (November 1987) (5.12), von zwischen 150 und 280 $m^2/g$, und einer spezifischen BET-Oberfläche ($S_{BET}$), gemessen gemäß ISO 5794/1 (Anhang D), von zwischen 45 und 550 $m^2/g$; und von 10 bis 70 phr eines zweiten Silikas mit einem Medianwert der Partikelgröße, ermittelt durch Zentrifugalsedimentierung, von weniger als 500 nm, einer spezifischen BET-Oberfläche, gemessen gemäß ISO 5794/1 (Anhang D), die sich auf 15 bis 25 $m^2/g$ beläuft, und einem spezifischen Gewicht von 2,1 bis 2,3 $g/cm^3$.

2. Reifen nach Anspruch 1, wobei das Elastomer aus der aus Butylkautschuk, chloriertem Butylkautschuk, bromiertem Butylkautschuk, synthetischem Polyisopren, Naturkautschuk, Styrol-Butadien-Kautschuk, Polybutadien, Copolymer von Isobutylen und Paramethylstyrol, und bromiertem Copolymer von Isobutylen und Paramethylstyrol bestehenden

Gruppe ausgewählt ist.

3. Reifen nach Anspruch 1, wobei das erste Silika eine spezifische BET-Oberfläche ($S_{BET}$) zwischen 200 und 260 $m^2/g$ aufweist.

4. Reifen nach mindestens einem der vorhergehenden Ansprüche, wobei das zweite Silika eine bimodale Partikelgrößenverteilung mit einem ersten Maximum im Bereich von 15 nm bis 25 nm oder bei 20 nm und einem zweiten Maximum im Bereich von 100 nm bis 400 nm aufweist.

5. Reifen nach mindestens einem der vorhergehenden Ansprüche, wobei die Menge des zweiten Silikas im Bereich von 10 bis 40 phr liegt.

6. Reifen nach mindestens einem der vorhergehenden Ansprüche, wobei das zweite Silika einen Medianwert der Partikelgröße im Bereich von 100 bis 200 nm aufweist.

7. Reifen nach mindestens einem der vorhergehenden Ansprüche, wobei die Gesamtmenge des ersten und zweiten Silikas in der Zusammensetzung sich auf 10 bis 30 Volumenprozent beläuft.

8. Reifen nach mindestens einem der vorhergehenden Ansprüche, wobei das zweite Silika mindestens im Wesentlichen sphärisch geformt ist; und/oder wobei das zweite Silika eine oberflächenbasierte Sphärizität von größer als 0,95 aufweist, wobei Sphärizität das Verhältnis der geometrischen spezifischen Oberfläche in $m^2/g$, auf Basis der Annahme, dass die im Wesentlichen sphärischen Partikel in Form echter Sphären vorliegen, zu der tatsächlich gemessenen spezifischen BET-Oberfläche in $m^2/g$ der im Wesentlichen sphärischen feinen Partikel ist.

9. Reifen nach mindestens einem der vorhergehenden Ansprüche, wobei das zweite Silika mindestens eine der folgenden Eigenschaften aufweist:

(i) einen Gehalt an Siliziumdioxid, bevorzugt amorphem $SiO_2$, von mindestens 90,0 Gewichtsprozent;
(ii) einen Kohlenstoffgehalt von nicht mehr als 1,50 Gewichtsprozent;
(iii) einen Eisenoxidgehalt von nicht mehr als 0,25 Gewichtsprozent;
(iv) einen Kupfergehalt von nicht mehr als 0,01 Gewichtsprozent;
(v) einen Mangangehalt von nicht mehr als 0,02 Gewichtsprozent;
(vi) einen Wassergehalt ($H_2O$ wenn verpackt) von nicht mehr als 0,80 Gewichtsprozent;
(vii) einen Glühverlust bei 975°C von 1,80% oder im Bereich von 1,70% bis 1,90%;
(viii) eine BET-Oberfläche im Bereich von 15 bis 25 $m^2/g$;
(ix) einen Medianwert der Partikelgröße von 0,15 Mikron oder im Bereich von 0,12 bis 0,18 Mikron;
(x) grobe Partikel >45 Mikron) von nicht mehr als 0,10 Gewichtsprozent;
(xi) einen pH-Wert (frisch) im Bereich von 6,5 bis 8,0;
(xii) ein spezifisches Gewicht von 2,2 $g/cm^3$ oder im Bereich von 2,15 $g/cm^3$ bis 2,25 $g/cm^3$;
(xiii) eine Schüttdichte (wenn verpackt) im Bereich von 500 bis 700 $kg/m^3$.

10. Reifen nach mindestens einem der vorhergehenden Ansprüche, wobei das erste Silika eine Größenverteilungsbreite $L_d$ ((d84-d16)/d50) von Objekten kleiner als 500 nm, gemessen mittels XDC-Partikelgrößenanalyse nach Ultraschallzerlegung, von mindestens 0,91 aufweist; und/oder wobei das erste Silika eine solche Porengrößenverteilung, ausgedrückt als Porenvolumenverteilung, aufweist, dass das Verhältnis $V_{(d5-d50)}/V_{(d5-d100)}$ mindestens 0,66 beträgt.

11. Reifen nach mindestens einem der vorhergehenden Ansprüche, wobei das erste Silika eine Größenverteilungsbreite $L'_d$ ((d84-d16)/d50) von Objekten kleiner als 500 nm, gemessen mittels XDC-Partikelgrößenanalyse nach Ultraschallzerlegung, von mindestens 0,95 und/oder eine solche Porengrößenverteilung, ausgedrückt als Porenvolumenverteilung, dass das Verhältnis $V_{(d5-d50)}/V_{(d5-d100)}$ mindestens 0,71 beträgt, aufweist.

12. Reifen nach mindestens einem der vorhergehenden Ansprüche, wobei das erste Silika eine Größenverteilungsbreite $L'_d$ ((d84-d16)/d50) von Objekten kleiner als 500 nm, gemessen mittels XDC-Partikelgrößenanalyse nach Ultraschallzerlegung, von mindestens 0,90 und/oder eine solche Porengrößenverteilung, ausgedrückt als Porenvolumenverteilung, dass das Verhältnis $V_{(d5-d50)}/V_{(d5-d100)}$ mindestens 0,74 beträgt, aufweist.

13. Reifen nach mindestens einem der vorhergehenden Ansprüche, wobei das erste Silika weiter eine Porenverteilung aufweist, wobei die Porenverteilung als Porenverteilungsbreite Idp von größer als 0,70 ausgedrückt ist.

**Revendications**

1. Bandage pneumatique comprenant une bande de roulement, la bande de roulement comprenant une composition de caoutchouc comprenant: 100 parties en poids d'au moins un élastomère ; de 10 à 80 parties en poids, par 100 parties en poids d'élastomère (phr), d'une première silice possédant une aire de surface spécifique CTAB ($S_{CTAB}$), telle qu'on la mesure conformément à la norme NF T 45007 (novembre 1987) (5.12), entre 150 et 280 $m^2/g$ et une aire de surface spécifique BET ($S_{BET}$), telle qu'on la mesure conformément à la norme ISO 5794/1 (annexe D), entre 45 et 550 $m^2/g$ ; et de 10 à 70 phr d'une deuxième silice possédant une granulométrie moyenne, déterminée par sédimentation centrifuge, inférieure à 500 nm, une aire de surface spécifique BET ($S_{BET}$) telle qu'on la mesure conformément à la norme ISO 5794/1 (annexe D) entre 15 et 25 $m^2/g$ et une masse volumique de 2,1 à 2,3 $g/cm^3$.

2. Bandage pneumatique selon la revendication 1, dans lequel l'élastomère est choisi parmi le groupe constitué par du caoutchouc butyle, du caoutchouc butyle chloré, du caoutchouc butyle bromé, du polyisoprène synthétique, du caoutchouc naturel, du caoutchouc de styrène butadiène, du caoutchouc de polybutadiène, un copolymère d'isobutylène et de paraméthylstyrène et un copolymère bromé d'isobutylène et de paraméthylstyrène.

3. Bandage pneumatique selon la revendication 1, dans lequel la première silice possède une aire de surface spécifique BET ($S_{BET}$) entre 200 et 260 $m^2/g$.

4. Bandage pneumatique selon au moins une des revendications précédentes, dans lequel la deuxième silice possède une distribution granulométrique bimodale avec un premier maximum dans la plage de 15 nm à 25 nm ou à 20 nm et un deuxième maximum dans la plage de 100 nm à 400 nm.

5. Bandage pneumatique selon au moins une des revendications précédentes, dans lequel la quantité de la deuxième silice se situe dans la plage de 10 à 40 phr.

6. Bandage pneumatique selon au moins une des revendications précédentes, dans lequel la deuxième silice possède une granulométrie moyenne dans la plage de 100 à 200 nm.

7. Bandage pneumatique selon au moins une des revendications précédentes, dans lequel la quantité totale de la première et de la deuxième silice dans la composition se situe dans la plage de 10 à 30 % en volume.

8. Bandage pneumatique selon au moins une des revendications précédentes, dans lequel la deuxième silice possède une configuration au moins essentiellement sphérique et/ou dans lequel la deuxième silice possède une sphéricité, basée sur l'aire de surface, supérieure à 0,95, la sphéricité représentant le rapport de l'aire de surface spécifique géométrique en $m^2/g$, en se basant sur l'hypothèse que les particules sphériques essentiellement sphériques se présentent sous la forme de sphères vraies par rapport à l'aire de surface spécifique BET mesurée en réalité, des fines particules essentiellement sphériques.

9. Bandage pneumatique selon au moins une des revendications précédentes, dans lequel la deuxième silice possède au moins une des propriétés suivantes :

   (i) une teneur en dioxyde de silicium, de préférence en $SiO_2$ amorphe, d'au moins 90,0 % en poids ;
   (ii) une teneur en carbone qui n'est pas supérieure à 1,50 % en poids ;
   (iii) une teneur en oxyde de fer qui n'est pas supérieure à 0,25 % en poids ;
   (iv) une teneur en cuivre qui n'est pas supérieure à 0,01 % en poids ;
   (v) une teneur en manganèse qui n'est pas supérieure à 0,02 % en poids ;
   (vi) une teneur en eau (en $H_2O$, à l'état conditionné) qui n'est pas supérieure à 0,80 % en poids ;
   (vii) une perte au feu à 975 °C de 1,80 % ou dans la plage de 1,70 % à 1,90 %;
   (viii) une aire de surface BET dans la plage de 15 à 25 $m^2/g$ ;
   (ix) une granulométrie moyenne de 0,15 micron ou dans la plage de 0,12 à 0,18 micron ;
   (x) une teneur en particules grossières >45 microns) qui n'est pas supérieure à 0,10 % en poids ;
   (xi) une valeur de pH (à l'état frais) dans la plage de 6,5 à 8,0 ;
   (xii) une masse volumique de 2,2 $g/cm^3$ ou dans la plage de 2,15 $g/ cm^3$ à 2,25 $g/ cm^3$.
   (xiii) une densité apparente (à l'état conditionné) dans la plage de 500 à 700 $kg/m^3$.

10. Bandage pneumatique selon au moins une des revendications précédentes, dans lequel la première silice possède une largeur de distribution granulométrique $L_d$ (($d_{84}$-$d_{16}$)$d_{50}$) d'objets inférieurs à 500 nm, mesurée via l'analyse

granulométrique par XDC après désintégration par ultrasons, s'élevant à au moins 0,91 ; et/ou dans lequel la première silice possède une distribution des pores que l'on exprime sous la forme d'une distribution du volume des pores telle que le rapport $V(d_5-d_{50})/V(d_5-d_{100})$ s'élève à au moins 0,66.

**11.** Bandage pneumatique selon au moins une des revendications précédentes, dans lequel la première silice possède une largeur de distribution granulométrique $L'_d$ $((d_{84}-d_{16})d_{50})$ d'objets inférieurs à 500 nm, mesurée via l'analyse granulométrique par XDC après désintégration par ultrasons, s'élevant à au moins 0,95 et/ou une distribution des pores que l'on exprime sous la forme d'une distribution du volume des pores telle que le rapport $V(d_5-d_{50})/V(d_5-d_{100})$ s'élève à au moins 0,71.

**12.** Bandage pneumatique selon au moins une des revendications précédentes, dans lequel la première silice possède une largeur de distribution granulométrique $L'_d$ $((d_{84}-d_{16})d_{50})$ d'objets inférieurs à 500 nm, mesurée via l'analyse granulométrique par XDC après désintégration par ultrasons, s'élevant à au moins 0,90 et/ou une distribution des pores que l'on exprime sous la forme d'une distribution du volume des pores telle que le rapport $V(d_5-d_{50})/V(d_5-d_{100})$ s'élève à au moins 0,74.

**13.** Bandage pneumatique selon au moins une des revendications précédentes, dans lequel la première silice possède en outre une distribution granulométrique, dans laquelle la distribution des pores est exprimée sous la forme d'une largeur de distribution des pores (ldp), supérieure à 0,70.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1078954 A
- EP 2072284 A
- EP 0942929 A
- EP 1837369 A
- US 20050032965 A
- WO 9928376 A
- WO 9928380 A
- WO 0073372 A
- WO 0073373 A
- US 6696035 B
- US 5915150 A
- US 6242534 A
- US 6207757 A
- US 6133364 A
- US 6372857 A
- US 5395891 A
- US 6127488 A
- US 5672639 A
- US 6608125 A
- US 20030130535 A


### Non-patent literature cited in the description


- *The Journal of the American Chemical Society,* February 1938, vol. 60, 309
- Determination of specific surface area of colloidal high structure silica by titration with sodium hydroxide. *Analytical Chemistry,* December 1956, vol. 28 (12
- Standard Methods for Analysts & Testing of Petroleum and Related Products and British Standard 2000 Parts. the Institute of Petroleum, 2003
- The Vanderbilt Rubber Handbook. 1978, 344-346
- **H. A. PALOWSKI et al.** *Rubber World,* June 1992
- *Rubber & Plastics News,* 26 April 1993